# EUROPÄISCHE PATENTANMELDUNG

(11) **EP 3 034 914 A1**
(43) Veröffentlichungstag der Anmeldung: **22.06.2016**
(21) Anmeldenummer: 14198565.5
(22) Anmeldetag: 17.12.2014
(51) Int. Cl.: F16H 63/34

(54) **Parksperrenanordnung**

(71) Anmelder: GETRAG Getriebe- und Zahnradfabrik Hermann Hagenmeyer GmbH & Cie KG, 74199 Untergruppenbach (DE)
(72) Erfinder: Jansen, Julia, 71636 Ludwigsburg (DE)
(74) Vertreter: Witte, Weller & Partner Patentanwälte mbB

(57) **Zusammenfassung**

Parksperrenanordnung (10) für ein Kraftfahrzeuggetriebe mit einem Parksperrenrad (12), das eine Verzahnung mit Zähnen (16) und Zahnlücken (18) aufweist, mit einer Parksperrenklinke (24), die einen Klinkenzahn (28) aufweist, der zur Einrichtung einer Parksperrenposition (P) in eine Zahnlücke (18) greifen kann, und mit einem Betätigungsmechanismus (30), der ein Betätigungsglied (32) zum Betätigen der Parksperrenklinke (24) von einer Freigabeposition (F) in die Parksperrenposition (P) aufweist, wobei das Betätigungsglied (32) über eine Einrückfeder (34) mit der Parksperrenklinke (24) gekoppelt ist, wobei die Einrückfeder (34) zum Einrichten der Parksperrenposition (P) Energie speichert, falls der Klinkenzahn (26) in einer Auflageposition (A) auf einem Zahn (16) des Parksperrenrades (12) aufliegt.

Dabei begrenzt eine Anschlageinrichtung (40) eine Verschwenkbewegung der Parksperrenklinke (24) aus der Auflageposition (A) in Richtung der Freigabeposition (F) bis zu einer Anschlagposition (B). (Fig. 3)

## Beschreibung

Die vorliegende Erfindung betrifft eine Parksperrenanordnung für ein Kraftfahrzeuggetriebe, mit einem Parksperrenrad, das eine Verzahnung mit Zähnen und Zahnlücken aufweist, mit einer Parksperrenklinke, die einen Klinkenzahn aufweist, der zur Einrichtung einer Parksperrenposition in eine Zahnlücke greifen kann, und mit einem Betätigungsmechanismus, der ein Betätigungsglied zum Betätigen der Parksperrenklinke von einer Freigabeposition in die Parksperrenposition aufweist, wobei das Betätigungsglied über eine Einrückfeder mit der Parksperrenklinke gekoppelt ist, wobei die Einrückfeder zum Einrichten der Parksperrenposition Energie speichert, falls der Klinkenzahn in einer Auflageposition auf einem Zahn des Parksperrenrades aufliegt.

Parksperrenanordnungen der oben beschriebenen Art sind allgemein bekannt und dienen in Kraftfahrzeugen, die ein automatisiertes Getriebe besitzen, zum Immobilisieren des Kraftfahrzeuges im Stillstand.

Das Parksperrenrad ist dabei in der Regel mit einer Ausgangswelle eines Kraftfahrzeuggetriebes verbunden. Die Parksperrenklinke ist in der Regel verschiebbar oder verschwenkbar an einem Gehäuse des Kraftfahrzeuggetriebes gelagert. Häufig ist die Parksperrenklinke mittels einer Feder in die Freigabeposition vorgespannt. Der Betätigungsmechanismus kann manuell betätigt werden und zu diesem Zweck beispielsweise mit einem Schalthebel im Innenraum des Kraftfahrzeuges gekoppelt sein. Der Betätigungsmechanismus kann jedoch auch mittels eines Aktuators betätigt werden.

Zum Versetzen der Parksperrenklinke von der Freigabeposition in die Parksperrenposition sind Mechanismen bekannt, um ein Betätigungsglied in einer linearen Richtung zu versetzen, wobei das Betätigungsglied über eine Einrückfeder mit einem Ziehkeil verbunden sein kann, der an der Parksperrenklinke angreift. Alternativ ist es bekannt (DE 20 2008 001 760 U1), dass der Betätigungsmechanismus einen Nocken aufweist, der um eine zu der Parksperrenradachse parallele Achse verschwenkbar gelagert ist. Das Betätigungsglied ist in diesem Fall eine Welle, an der der Nocken begrenzt verdrehbar ist, wobei die Betätigungswelle und der Nocken über eine Einrückfeder gekoppelt sind.

Die Einrückfeder nimmt beim Betätigen Energie auf, falls der Klinkenzahn in einer sog. Auflageposition auf einem Zahn des Parksperrenrades aufliegt. Sobald das Kraftfahrzeug etwas weiter rollt und folglich das Parksperrenrad verdreht wird, gelangt der Klinkenzahn in Ausrichtung mit einer Zahnlücke des Parksperrenrades und wird über die in der Einrückfeder gespeicherte Energie in die Zahnlücke gedrückt, um die Parksperrenposition einzurichten.

Parksperrenanordnungen der oben beschriebenen Art sind generell dazu ausgelegt, dass die Parksperrenposition auch dann eingerichtet werden kann, wenn eine Relativgeschwindigkeit zwischen Parksperrenrad und Parksperrenklinke vorliegt, die kleiner ist als eine relativ geringe Schwellengeschwindigkeit, also bei einem Rollen des Fahrzeuges. Hierdurch kann die Sicherheit erhöht werden.

Andererseits sind Parksperrenanordnungen der oben beschriebenen Art so ausgelegt, dass bei einer Relativgeschwindigkeit oberhalb der Schwellengeschwindigkeit zwischen Parksperrenklinke und Parksperrenrad, also beispielsweise während der Fahrt des Kraftfahrzeuges, ein Einrichten der Parksperrenposition verhindert wird. Denn eine derartige Betätigung hätte möglicherweise eine Zerstörung der Parksperrenanordnung oder von Teilen des Kraftfahrzeuggetriebes zur Folge.

Eine Klinkenkontaktfläche der Parksperrenklinke und/oder eine Zahnkontaktfläche der Zähne der Parksperrenradverzahnung sind dabei vorzugsweise so geformt, dass die Parksperrenklinke abgewiesen wird, beispielsweise durch eine Art Keilgeometrie, durch Anbringen von Fasen oder dergleichen. Wenn bei einer Relativgeschwindigkeit oberhalb der Schwellengeschwindigkeit die Parksperrenklinke in Richtung des Parksperrenrades bewegt wird, gelangen die Kontaktflächen in Anlage, was der der Auflageposition entspricht. Durch die speziellen Geometrien der Kontaktflächen wird die Parksperrenklinke dabei gegen die Kraft der Einrückfeder in Richtung der Freigabeposition abgewiesen, also in diese Richtung gestoßen.

Aus dem Dokument EP 1 895 206 A1 ist es bekannt, die Flächen bzw. Konturen von Klinkenkontaktfläche und Zahnkontaktfläche so auszugestalten, dass die Klinke bei höheren Geschwindigkeiten mit geringer maximaler Impulsgröße abgewiesen wird, um mechanische Beanspruchungen gering zu halten. Die Konturen können dabei beispielsweise einer logarithmischen Funktion entsprechen.

Sofern eine Parksperrenklinke nur durch eine Feder in die Freigabeposition vorgespannt ist, kann es bei starken oder stoßartigen Bewegungen des Kraftfahrzeuges zu einer Auslenkung der Parksperrenklinke gegen diese Federkraft kommen, obgleich die Parksperre nicht betätigt wird. Aus dem zuvor genannten Dokument DE 20 2008 001 760 U1 ist es daher bekannt, die Parksperrenklinke in der Freigabeposition mittels einer Führungseinrichtung formschlüssig zu halten. Ein diesbezüglich vergleichbarer Ansatz ist auch aus dem Dokument EP 2 657 578 A2 bekannt, das eine Betätigung einer Parksperrenklinke mittels einer Schaltwalze offenbart, an der ein sich um die Walzenachse herum erstreckender Führungsabschnitt ausgebildet ist, in den ein mit der Parksperrenklinke verbundener Stift greift.

Bei solchen zwangsgeführten Parksperrenklinken kann zwar ein Betätigen der Parksperrenanordnung aufgrund von Vertikalbewegungen des Kraftfahrzeuges oder dgl. vermieden werden. Fehlbetätigungen sind jedoch nicht ausgeschlossen, weder bei einer manuellen Bedienung, wie sie in dem Dokument DE 20 2008 001 760 U1 offenbart ist, noch bei automatisierten Betätigungen, wie sie in dem Dokument EP 2 657 578 A2 genannt sind. Bei einer solchen Fehlbedienung kommt die oben beschriebene Abweisegeometrie zum Tragen.

Trotz dieser Maßnahme kann es jedoch eine Geschwindigkeit oberhalb der oben genannten Schwellengeschwindigkeit geben, bei der trotz diverser Maßnahmen ein Einfallen der Parksperrenklinke in eine Zahnlücke nicht ausgeschlossen ist. Ein derartiges Phänomen bzw. eine solche Geschwindigkeit wird auch als "Second Drop-in Speed" bezeichnet.

Vor diesem Hintergrund ist es eine Aufgabe der Erfindung, eine verbesserte Parksperrenanordnung anzugeben, die insbesondere hinsichtlich der Sicherheit gegenüber einem Einrichten der Parksperrenposition bei höheren Geschwindigkeiten verbessert ist.

Diese Aufgabe wird bei der eingangs genannten Parksperrenanordnung dadurch gelöst, dass eine Anschlageinrichtung eine Verschwenkposition der Parksperrenklinke aus der Auflageposition in Richtung der Freigabeposition bis zu einer Anschlagposition begrenzt.

Die Anschlageinrichtung begrenzt folglich eine Auslenkung der Parksperrenklinke von dem Parksperrenrad weg. Es hat sich gezeigt, dass eine solche Wegbegrenzung mittels einer Anschlageinrichtung sicher verhindern kann, dass bei einer höheren Geschwindigkeit des Kraftfahrzeuges und versehentlichem Betätigen der Parksperrenanordnung (sei es manuell oder automatisiert) die Parksperrenklinke in das Parksperrenrad einfallen kann.

Während im Stand der Technik, d.h. ohne eine derartige Anschlageinrichtung, häufig eine bestimmte Geschwindigkeit problematisch ist, die sich aufgrund eines Resonanzfrequenzphänomens ergibt, kann durch die Begrenzung der Auslenkung von der Auflageposition in Richtung der Freigabeposition eine derartige kritische Geschwindigkeit ausgeschlossen werden. Eine Erklärung könnte darin liegen, dass eine solche kritische Frequenz in Bereiche verschoben wird, die außerhalb der normalen Fahrzeuggeschwindigkeitsbereiche liegt.

Das Resonanzverhalten im Stand der Technik ergibt sich vermutlich aufgrund des Zusammenwirkens der Konturen von Zahnkontaktfläche und Klinkenkontaktfläche, der Masse der beteiligten Bauteile, der Geometrie der beteiligten Bauteile (insbesondere Zahnlücke, Zahnbreite), sowie ggf. aus der Kraft der Einrückfeder und dgl.

Bei der versehentlichen Betätigung der Parksperrenanordnung während der Fahrt (bei einer Geschwindigkeit höher als eine Schwellengeschwindigkeit, die beispielsweise im Bereich von 2 bis 25 km/h liegen kann), wird die Parksperrenklinke über die Einrückfeder in Richtung hin zu dem Parksperrenrad gedrückt, von wo die Parksperrenklinke durch geeignete Konturen an der Zahnkontaktfläche bzw. der Klinkenkontaktfläche in der entgegengesetzten Richtung abgewiesen wird.

Folglich ergibt sich durch die Kraft der so gespannten Einrückfeder eine wieder in Richtung hin zu dem Parksperrenrad gerichtete Bewegung der Parksperrenklinke. Durch die Anschlageinrichtung wird der Weg jedoch begrenzt, um den die Klinke gegenüber dem Parksperrenrad mittels der Abweisekonturen ausgelenkt werden kann. Durch die Wegbegrenzung mittels der Anschlageinrichtung wird folglich auch die Auslenkung der Einrückfeder nach dem Abweisen begrenzt, so dass die Parksperrenklinke in der Folge mit einer geringeren Kraft wieder in Richtung hin auf das Parksperrenrad zu beschleunigt wird.

Es versteht sich dabei, dass die Anschlageinrichtung vorteilhaft lediglich dann wirkt, wenn die Parksperrenklinke aus der Auflageposition in Richtung der Freigabeposition zu bewegen ist, während eine Betätigung der Parksperrenklinke in die Parksperrenposition erfolgt.

Sofern die Betätigung aufgehoben wird bzw. der Betätigungsmechanismus eine Rückkehr der Parksperrenklinke in die Freigabeposition ermöglicht oder erzwingt, kommt die Anschlageinrichtung nicht zur Wirkung.

Folglich ist es mittels der erfindungsgemäßen Parksperrenanordnung und der darin realisierten Anschlaganordnung vorzugsweise möglich, die Auslenkung der Parksperrenklinke nur dann in Richtung hin bis zu der Anschlagposition zu begrenzen, wenn der Betätigungsmechanismus zum Bewegen der Parksperrenklinke von der Freigabeposition in Richtung der Parksperrenposition betätigt bzw. bewegt wird.

Die Aufgabe wird somit vollkommen gelöst.

Gemäß einer besonders bevorzugten Ausführungsform ist der Verschwenkweg von der Auflageposition bis zu der Anschlagposition kleiner als der Verschwenkweg von der Auflageposition in die Parksperrenposition.

Der Verschwenkweg von der Auflageposition in die Parksperrenposition entspricht im Wesentlichen der Zahnhöhe der Verzahnung des Parksperrenrades. Der durch die Anschlageinrichtung bei betätigter Parksperrenanordnung eingerichtete Verschwenkweg von der Auflageposition bis zu der Anschlagposition ist folglich relativ klein. Insbesondere kann dieser Verschwenkweg kleiner sein als das 0,7-fache des Verschwenkweges von der Auflageposition in die Parksperrenposition, insbesondere kleiner als das 0,5-fache.

Ferner ist es vorteilhaft, wenn der Verschwenkweg von der Auflageposition bis zu der Anschlagposition kleiner ist als 10 mm, insbesondere kleiner als 5 mm.

Die Anschlageinrichtung kann als von dem Betätigungsmechanismus getrennt ausgebildete Einrichtung ausgebildet sein, wobei Mittel vorzusehen sind, damit die Anschlageinrichtung nur dann zur Anwendung kommt, wenn der Betätigungsmechanismus betätigt ist.

Von besonderem Vorzug ist es jedoch, wenn ein Anschlagelement der Anschlageinrichtung starr mit dem Betätigungsglied verbunden ist.

Durch diese Maßnahme kann erreicht werden, dass das Anschlagelement mit einem Bewegen des Betätigungsgliedes mit bewegt wird, also dann eine Anschlagposition bestimmt, wenn die Parksperrenanordnung in Richtung der Parksperrenposition betätigt ist.

Sofern der Betätigungsmechanismus in der Freigabeposition ist, kann die Parksperrenklinke hingegen ungehindert in die Freigabeposition bewegt werden.

Gemäß einer weiteren insgesamt bevorzugten Ausführungsform ist an der Parksperrenklinke ein Anschlagabschnitt ausgebildet, der in der Anschlagposition an einem Anschlagelement anliegt.

Der Anschlagabschnitt kann einstückig mit der Parksperrenklinke ausgebildet sein oder durch ein separates Element, das mit der Parksperrenklinke verbunden ist.

Generell ist es möglich, dass das Betätigungsglied zum Einrichten der Parksperrenposition in einer Längsrichtung bewegt wird, die parallel oder quer zu einer Verschwenkachse der Parksperrenklinke ausgerichtet sein kann.

Von besonderem Vorzug ist es jedoch, wenn das Betätigungsglied eine Betätigungswelle ist, an der ein Betätigungsnocken begrenzt verdrehbar gelagert ist, wobei die Einrückfeder als Drehfeder zwischen der Betätigungswelle und dem Betätigungsnocken wirkt.

Eine Parksperrenanordnung mit einer solchen Betätigungswelle ist aus dem Dokument DE 20 2008 001 760 U1 bekannt geworden. Dessen Offenbarungsgehalt soll vorliegend vollumfänglich durch Bezugnahme enthalten sein.

Bei dieser Ausgestaltung ist es bevorzugt, wenn das Parksperrenrad um eine erste Achse an der Getriebewelle verdrehbar ist und wenn die Parksperrenklinke um eine zweite Achse verschwenkbar ist, die parallel zu der ersten Achse ist.

Für diesen Fall ist es ferner von Vorteil, wenn die Betätigungswelle an einer dritten Achse ausgerichtet ist, die parallel zu der ersten Achse und/oder der zweiten Achse ausgerichtet ist.

Der Betätigungsnocken kann unmittelbar an der Parksperrenklinke angreifen. Die Parksperrenklinke kann mit Absätzen ausgebildet sein, an denen der Betätigungsnocken in der Freigabeposition und/oder der Parksperrenposition anliegen kann.

Hierbei ist es ferner vorteilhaft, wenn das Anschlagelement als Anschlagnocken ausgebildet ist, der fest mit der Betätigungswelle verbunden ist.

Der Anschlagnocken kann als Nockenplatte oder als Stift oder dgl. ausgebildet sein.

Von Vorteil ist hierbei, dass mit einer Verdrehung der Betätigungswelle der Anschlagnocken erst dann in eine Position gelangt, bei der er eine Anschlagposition definiert, wenn der Betätigungsmechanismus betätigt wird, die Betätigungswelle also verdreht wird.

Der Anschlagnocken kann generell an beliebiger Stelle an der Betätigungswelle angeordnet sein, ist jedoch vorzugsweise axial ausgerichtet mit oder axial benachbart zu dem Betätigungsnocken angeordnet. Der Anschlagnocken kann beispielsweise als Stift ausgebildet sein, der die Betätigungswelle radial durchsetzt und die zusätzliche Funktion hat, eine Verdrehbarkeit eines Betätigungsnockens gegenüber der Betätigungswelle zu begrenzen.

Dies ermöglicht es, die Anschlageinrichtung auf konstruktive Art und Weise zu bilden, da auch ein Anschlagabschnitt der Parksperrenklinke konstruktiv günstig ausgebildet sein kann.

Insbesondere ist es nämlich hierbei vorteilhaft, wenn die Parksperrenklinke einen Anschlagabschnitt in Form eines Axialvorsprunges aufweist.

Ein solcher seitlicher Axialvorsprung kann einstückig mit der Parksperrenklinke ausgebildet sein, was aus Festigkeitsgründen von Vorteil sein kann. Alternativ kann der Axialvorsprung auch durch ein separates Bauelement ausgebildet sein, das mit der Parksperrenklinke verbunden ist, beispielsweise durch einen Stift, der in eine Bohrung der Parksperrenklinke eingesetzt ist.

Durch die Maßnahme, den Anschlagabschnitt durch einen Axialvorsprung zu bilden, kann der Anschlagabschnitt in axialer Richtung mit einem Anschlagnocken ausgerichtet sein, der an der Betätigungswelle festgelegt ist.

Wie oben erwähnt, ist das Betätigungsglied vorzugsweise eine Betätigungswelle.

In einer alternativen Ausführungsform ist das Betätigungsglied linear verschieblich ausgebildet bzw. in Bezug auf ein Gehäuse gelagert.

Generell ist es vorteilhaft, wenn die Parksperrenklinke eine zu dem Parksperrenrad weisende Klinkenkontaktfläche aufweist, wobei die Zähne der Verzahnung des Parksperrenrades eine Zahnkontaktfläche aufweisen, wobei die Klinkenkontaktfläche und eine Zahnkontaktfläche sich in der Auflageposition berühren und wobei die Klinkenkontaktfläche und/oder die Zahnkontaktflächen so ausgebildet sind, dass die Parksperrenklinke in Richtung der Freigabeposition abgewiesen werden kann, wenn sich das Parksperrenrad mit einer Drehzahl dreht, die größer ist als eine Schwellendrehzahl (entsprechend einer Schwellengeschwindigkeit des Kraftfahrzeuges, wie oben beschrieben).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform einer erfindungsgemäßen Parksperrenanordnung in einer Freigabeposition;
- Fig. 2: die Parksperrenanordnung der Fig. 1 in einer Parksperrenposition;
- Fig. 3: die Parksperrenanordnung der Fig. 1 und 2 in einer Auflageposition;
- Fig. 4: eine schematische Detailansicht eines Details IV der Fig. 3;
- Fig. 5: eine schematische Ansicht einer weiteren Ausführungsform einer erfindungsgemäßen Parksperrenanordnung in einer Auflageposition;
- Fig. 6: eine Seitenansicht der Parksperrenanordnung der Fig. 5;
- Fig. 7: eine schematische Darstellung einer weiteren Ausführungsform einer erfindungsgemäßen Parksperrenanordnung;
- Fig. 8: eine Schnittansicht entlang der Linie VIII-VIII der Fig. 7; und
- Fig. 9: eine schematische perspektivische Ansicht einer weiteren Ausführungsform einer Parksperrenklinke für eine erfindungsgemäße Parksperrenanordnung.

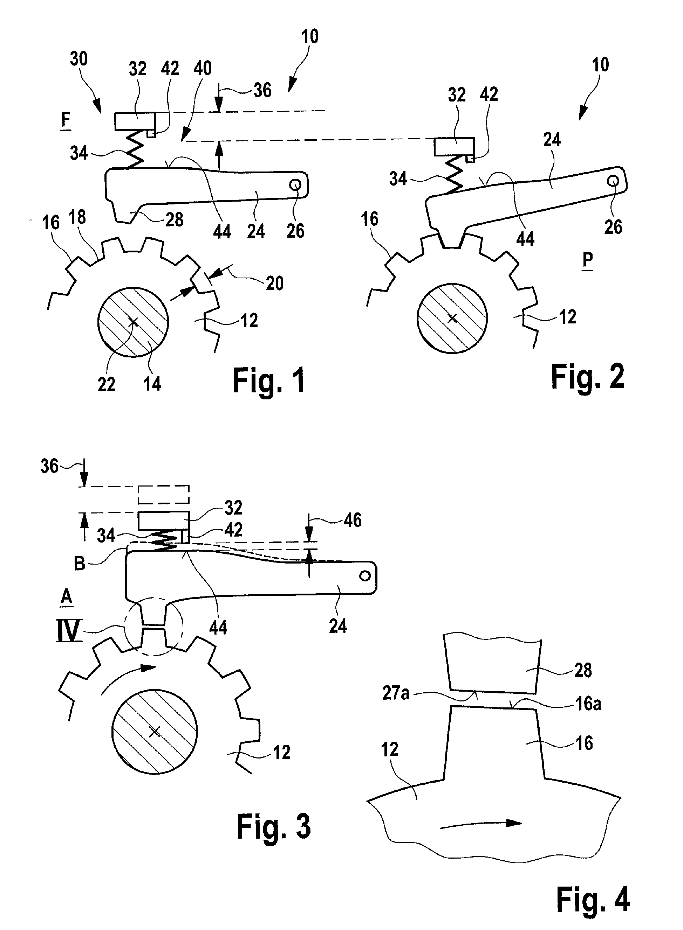

In den Fig. 1 bis 4 ist eine erste Ausführungsform einer Parksperrenanordnung für ein Kraftfahrzeug schematisch dargestellt und generell mit 10 bezeichnet.

Die Parksperrenanordnung 10 weist ein Parksperrenrad 12 auf, das an einer Getriebewelle 14 drehfest festgelegt ist, beispielsweise an einer Getriebeausgangswelle. An dem Parksperrenrad 12 ist eine Verzahnung mit Zähnen 16 und Zahnlücken 18 ausgebildet. Die Zähne 16 haben eine Zahnhöhe 20. Die Getriebewelle 14 und folglich das Parksperrenrad 12 sind konzentrisch zu einer ersten Achse 22 ausgerichtet.

Die Parksperrenanordnung 10 weist ferner eine Parksperrenklinke 24 auf, die um eine zweite Achse 26 verschwenkbar in Bezug auf das Parksperrenrad 12 gelagert ist, beispielsweise an einem Gehäuse eines Kraftfahrzeuggetriebes. Die zweite Achse 26 ist vorzugsweise parallel zu der ersten Achse 22. Die Parksperrenklinke 24 weist einen Klinkenzahn 28 auf, der an die Verzahnung angepasst ist und in eine Zahnlücke 18 eingeführt werden kann.

Fig. 1 zeigt die Parksperrenanordnung 10 in einer Freigabeposition F, bei der der Klinkenzahn 28 sich nicht in Eingriff mit dem Parksperrenrad 12 befindet. Fig. 2 zeigt die Parksperrenanordnung 10 in einer Parksperrenposition, bei der der Klinkenzahn 28 in eine Zahnlücke 18 der Parksperrenradverzahnung eingefallen ist.

Zum Überführen der Parksperrenanordnung von der Freigabeposition F in die Parksperrenposition P, und optional auch umgekehrt, ist ein Betätigungsmechanismus 30 vorgesehen. Der Betätigungsmechanismus 30 beinhaltet ein Betätigungsglied 32. Das Betätigungsglied 32 wird bewegt, um die Parksperrenklinke 24 von der Freigabeposition F in die Parksperrenposition P zu bewegen. Dabei ist das Betätigungsglied 32 über eine Einrückfeder 34 mit der Parksperrenklinke 24 gekoppelt.

Im vorliegenden Fall wird das Betätigungsglied 32 zum Bewegen der Parksperrenklinke 24 in die Parksperrenposition P in einer Richtung radial in Bezug auf die erste Achse 22 bewegt, also auf einen Rücken der Parksperrenklinke 24 zu. Es versteht sich jedoch, dass das Betätigungsglied 32 auch parallel oder quer zu der ersten Achse 22 bewegt werden kann, beispielsweise zum Ziehen eines Ziehkeils oder dgl.. Schließlich kann das Betätigungsglied 32 in manchen Fällen auch verdreht werden, wie es nachstehend noch beschrieben werden wird.

Vorliegend wird das Betätigungsglied 32, wie gesagt, zum Einrichten der Parksperrenposition P linear bewegt, und zwar um einen Betätigungsweg 36 auf die Parksperrenklinke 24 zu.

In manchen Fällen kann die Parksperrenklinke 24 in die Freigabeposition F mittels einer - nicht dargestellten - Feder vorgespannt sein, wobei die Federkonstante der Einrückfeder 34 in diesem Fall größer ist als jene der Vorspannfeder. Eine Bewegung des Betätigungsgliedes 32 in Richtung hin zu der Parksperrenklinke 24 führt dazu, dass die Parksperrenklinke 24 um die zweite Achse 26 herum verschwenkt wird, so dass der Klinkenzahn 28 in eine Zahnlücke 18 greift, wie es in Fig. 2 zu sehen ist, wodurch die Parksperrenposition P eingerichtet ist. Hierdurch ist ein Fahrzeug, das ein Kraftfahrzeuggetriebe mit einer solchen Parksperrenanordnung 10 aufweist, immobilisiert.

In manchen Fällen kann es während des Betätigungsvorganges dazu kommen, dass der Klinkenzahn 28 auf einem Zahn 16 aufliegt, wie es in Fig. 3 schematisch dargestellt ist. In diesem Fall führt die Bewegung des Betätigungsgliedes 32 um den Betätigungsweg 36 dazu, dass die Parksperrenklinke 24 nicht in eine Zahnlücke 18 einfallen kann. Daher wird die Einrückfeder 34 in diesem Fall komprimiert, so dass darin Energie gespeichert wird. Ausgehend von der Position der Fig. 3, die eine sog. Auflageposition A zeigt, führt ein Rollen des Fahrzeuges und folglich ein Verdrehen des Parksperrenrades in einer beliebigen Richtung dazu, dass der Klinkenzahn 28 in eine benachbarte Zahnlücke 18 einfällt, und zwar aufgrund der in der Einrückfeder 34 gespeicherten Energie. Anschließend ergibt sich wiederum die Parksperrenposition P, wie sie in Fig. 2 gezeigt ist.

Die Auflageposition A der Fig. 3 kann sich im Wesentlichen auch dann ergeben, wenn die Parksperrenanordnung 10 versehentlich betätigt wird, während das Fahrzeug fährt, sich das Parksperrenrad 12 folglich mit einer Drehzahl größer als eine Schwellendrehzahl dreht. Bei kleinen Geschwindigkeiten ist die Drehzahl des Parksperrenrades so gering, dass der Klinkenzahn 28 dennoch in eine Zahnlücke 18 einfallen bzw. einrücken kann. Bei Drehzahlen oberhalb dieser Schwellendrehzahl wird der Klinkenzahn 28 jedoch abgewiesen, kann also nicht in eine der Zahnlücken 18 einfallen. Hierzu können, wie es in Fig. 4 gezeigt ist, an einer Klinkenkontaktfläche 28a oder einer Zahnkontaktfläche 16a Konturen vorgesehen sein, die dafür sorgen, dass die Parksperrenklinke 24 bei jedem Kontakt mit der Verzahnung in radialer Richtung weggedrückt wird. Im einfachsten Fall können die Konturen keilförmig sein, wie es in Fig. 4 dargestellt ist. Die Konturen können jedoch auch eine logarithmische Funktion haben oder eine sonstwie gekrümmte Funktion. Es versteht sich, dass die Kontur generell auf eine bestimmte Fahrtrichtung des Kraftfahrzeuges abgestellt ist, nämlich die Vorwärtsfahrtrichtung. In manchen Fällen kann die Kontur auch für höhere Rückwärtsfahrgeschwindigkeiten ausgelegt sein.

Die Parksperrenanordnung 10 beinhaltet ferner eine Anschlageinrichtung 40. Die Anschlageinrichtung 40 weist ein Anschlagelement 42 auf, das starr mit dem Betätigungsglied 32 verbunden ist. Ferner ist an der Parksperrenklinke 24 ein Anschlagabschnitt 44 ausgebildet, der speziell für diesen Zweck geformt sein kann, jedoch auch, wie in Fig. 3 dargestellt, durch einen Rückenabschnitt der Parksperrenklinke 24 gebildet sein kann.

Die Anschlageinrichtung 40 begrenzt den Verschwenkweg der Parksperrenklinke 24 aus der in Fig. 3 gezeigten Auflageposition A in Richtung hin zu der Freigabeposition F bis zu einer Anschlagposition B, die in Fig. 3 gestrichelt dargestellt ist. In der Anschlagposition B liegt der Anschlagabschnitt 44 an dem Anschlagelement 42 an. Der auf diese Weise begrenzte Verschwenkweg (Anschlagweg) von der Position A in die Position B ist in Fig. 3 mit 46 bezeichnet.

Eine Begrenzung des Anschlagweges 46 auf einen Wert kleiner als die Zahnhöhe 20 kann dazu beitragen, dass ausgeschlossen werden kann, dass der Klinkenzahn 28 bei höheren Drehzahlen oberhalb der Schwellendrehzahl in eine Zahnlücke einfällt. Im Stand der Technik kann dies manchmal für eine oder eine begrenzte Anzahl von Geschwindigkeiten erfolgen, die sich durch Eigenschwingungen bzw. Resonanzfrequenzen des Systems ergeben können. Durch die Begrenzung des Auslenkungsweges der Parksperrenklinke 24 ausgehend aus der Auflageposition A in eine Anschlagposition B kann dieses Phänomen verringert bzw. verhindert werden.

Der Verschwenkweg bzw. Anschlagweg 46 ist vorzugsweise kleiner als 10 mm, insbesondere kleiner als 5 mm.

Bei der Parksperrenanordnung 10 der Fig. 1 bis 4 kann die Einrückfeder 34 direkt auf die Parksperrenklinke 24 wirken, wie es in den Figuren dargestellt ist. Die Betätigungsanordnung 30 kann jedoch auch noch ein weiteres Element aufweisen, wie beispielsweise ein Übertragungselement, das mit der Einrückfeder 34 verbunden ist und das im Betrieb an der Parksperrenklinke 24 anliegt. Ein derartiges Übertragungselement kann in manchen Ausführungsformen beispielsweise ein Ziehkeil sein.

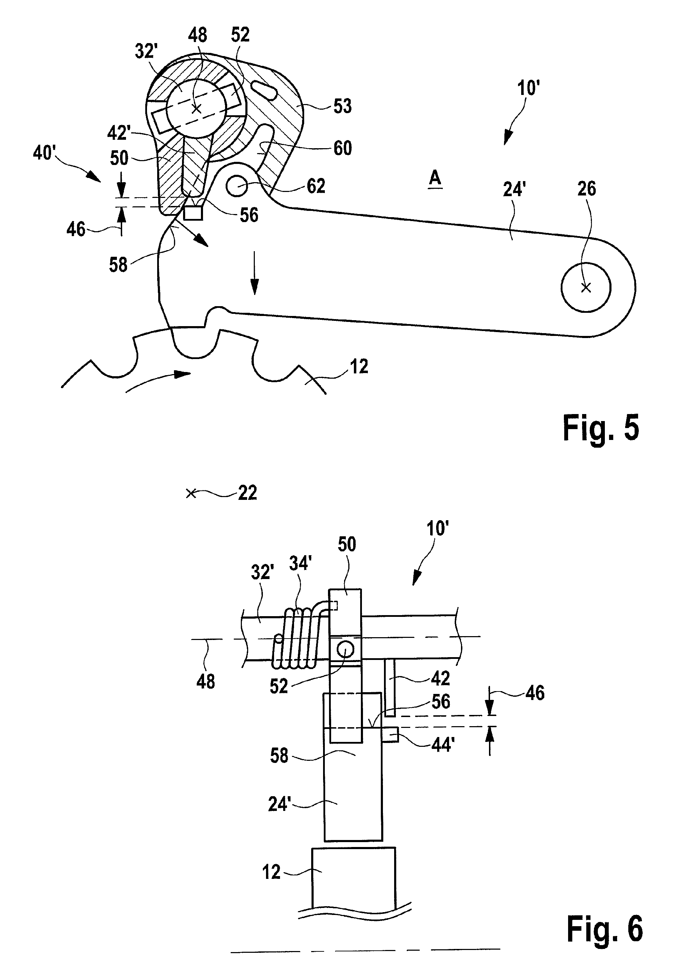

In den Fig. 5 und 6 ist eine weitere Ausführungsform einer Parksperrenanordnung 10' gezeigt, die hinsichtlich Aufbau und Funktionsweise generell der Parksperrenanordnung 10 der Fig. 1 bis 4 entspricht. Gleiche Elemente sind daher durch gleiche Bezugszeichen gekennzeichnet. Im Folgenden werden im Wesentlichen die Unterschiede erläutert.

Bei der Parksperrenanordnung 10' der Fig. 5 und 6 weist der Betätigungsmechanismus 30 ein Betätigungsglied 32' in Form einer Betätigungswelle auf. Die Betätigungswelle 32' ist entlang einer dritten Achse 48 ausgerichtet, die vorzugsweise parallel verläuft zu der ersten Achse 22 und der zweiten Achse 26.

An der Betätigungswelle 32' ist ein Betätigungsnocken 50 begrenzt verdrehbar gelagert. Zu diesem Zweck weist der Betätigungsnocken 50 umfängliche Aussparungen auf, und die Betätigungswelle 32' ist von einem Stift 52 durchsetzt, der in diese Aussparungen eingreift, wie es in Fig. 5 schematisch angedeutet ist. Der Stift 52 kann in einer alternativen Ausführungsform auch so ausgebildet und an der Betätigungswelle 32' festgelegt sein, dass er als Anschlagelement 42 dient. Der Stift 52 ist in diesem Fall vorzugsweise nicht nur etwas länger sondern auch breiter ausgestaltet, und in der richtigen Drehposition an der Betätigungswelle angebracht. Insbesondere ist der Stift 52 für diesen Fall so ausgerichtet, dass er den Anschlagabschnitt 44' erreicht. Eine derartige Ausführungsform kann deswegen bevorzugt sein, weil die Funktion der Begrenzung der Verdrehbarkeit des Betätigungsnockens 50 und die Funktion des Anschlagelementes durch einen einzigen Stift realisiert werden können, der fest mit der Betätigungswelle 32' verbunden wird.

Ferner ist in Fig. 5 ein Kulissenelement 53 dargestellt, das mit dem Betätigungsnocken 50 fest gekoppelt ist und dazu dient, die Parksperrenklinke 24' in der Freigabeposition formschlüssig zu halten, so dass eine Vorspannfeder für diesen Zweck nicht erforderlich ist.

Ferner ist an der Parksperrenklinke 24' ein Parksperrenpositionsabsatz 56 ausgebildet. In der Parksperrenposition liegt ein vorderer Abschnitt des Parksperrennockens 50 auf dem Parksperrenpositionsabsatz 56 auf und verhindert auf diese Weise ein versehentliches Bewegen der Parksperrenklinke 24' in Richtung der Freigabeposition F.

Um die Parksperrenklinke 24' aus dieser Stellung wieder in die Freigabeposition zu versetzen, wird die Betätigungswelle 32' so gedreht, dass der Betätigungsnocken 50 den Parksperrenpositionsabsatz 56 wieder freigibt.

Ausgehend von dem Parksperrenpositionsabsatz 56 in Richtung hin zu dem Parksperrenrad 12 ist an der Parksperrenklinke 24' eine Schrägkontur 58 ausgebildet. Die Schrägkontur 58 ist so geformt, dass bei einer Verdrehung des Nockens 50 auf diese zu die Parksperrenklinke 24' in Richtung der Parksperrenposition P gedrückt wird. Dies ist in Fig. 5 durch Pfeile angedeutet.

An der Parksperrenklinke 24' ist ferner ein Stift 62 festgelegt, der sich in eine Kulisse 60 des Kulissenelementes 53 hinein erstreckt, so dass die Parksperrenklinke 24' in einer Freigabeposition formschlüssig gehalten werden kann.

In Fig. 6 ist zu erkennen, dass die Einrückfeder 34' als Spiralfeder ausgebildet ist, die um die Betätigungswelle 32' herum angeordnet ist und an einem Ende mit dem Betätigungsnocken 50 verbunden ist (exzentrisch zu der dritten Achse 48), und am anderen Ende mit der Betätigungswelle 32' selbst.

In den Fig. 5 und 6 ist ferner gezeigt, dass die Anschlageinrichtung 40' ein Anschlagelement 42 in Form eines Anschlagnockens 42' aufweist, der starr mit der Betätigungswelle 32' verbunden ist. Ferner kann an der Parksperrenklinke 24' ein Anschlagabschnitt 44' ausgebildet sein, der nach der Art eines Axialvorsprunges ausgebildet ist und folglich in axialer Richtung mit dem Anschlagnocken 42' ausgerichtet ist. In Fig. 5 ist zu erkennen, dass in einer Position zwischen der Freigabeposition und der Parksperrenposition (Anlage des Betätigungsnockens 50 an der Schrägkontur 58), also beispielsweise in der Anschlagposition A, wie sie in Fig. 5 gezeigt ist, zwischen dem Anschlagelement 42' und dem Anschlagabschnitt 44' ein Anschlagweg 46 eingerichtet ist, der eine radiale Auslenkung in Richtung hin zu der Freigabeposition F begrenzt, wie bei der vorherigen Ausführungsform.

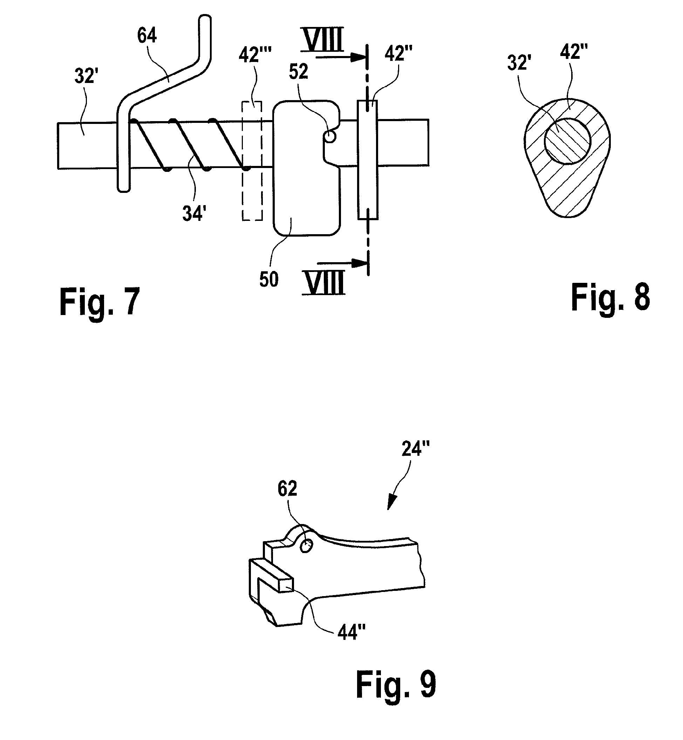

Fig. 7 zeigt eine der Fig. 6 vergleichbare Ansicht, wobei zu sehen ist, dass ein Anschlagelement 42" in Form eines Anschlagnockens 42" mit einer Bohrung zur Aufnahme der Betätigungswelle 32' ausgebildet sein kann, wie es in Fig. 8 zu sehen ist. Ferner ist zu erkennen, dass ein solches Anschlagelement 42" auf der einen axialen Seite des Betätigungsnockens angeordnet sein kann oder auf der anderen axialen Seite, wie es bei 42'" gezeigt ist.

Fig. 7 zeigt ferner ein Hebelelement 64, das beispielsweise mit einer Rasteinrichtung in Eingriff stehen kann, um die Freigabeposition F und die Parksperrenposition P durch Rasteingriffe zu unterstützen. Das Hebelelement 64 oder ein weiteres Hebelelement kann jedoch auch mit einem Antrieb zum Verdrehen der Betätigungswelle 32' gekoppelt sein, entweder durch manuelle Betätigung eines Schalthebels oder durch einen Aktuator.

Fig. 9 zeigt eine weitere Ausführungsform einer Parksperrenklinke 24", bei der ein Anschlagabschnitt 44" in Form eines Axialvorsprunges einstückig mit der Parksperrenklinke 24" ausgebildet ist.

## Patentansprüche

1. Parksperrenanordnung (10) für ein Kraftfahrzeuggetriebe mit
- einem Parksperrenrad (12), das eine Verzahnung mit Zähnen (16) und Zahnlücken (18) aufweist,
- einer Parksperrenklinke (24), die einen Klinkenzahn (28) aufweist, der zur Einrichtung einer Parksperrenposition (P) in eine Zahnlücke (18) greifen kann, und
- einem Betätigungsmechanismus (30), der ein Betätigungsglied (32) zum Betätigen der Parksperrenklinke (24) von einer Freigabeposition (F) in die Parksperrenposition (P) aufweist, wobei das Betätigungsglied (32) über eine Einrückfeder (34) mit der Parksperrenklinke (24) gekoppelt ist, wobei die Einrückfeder (34) zum Einrichten der Parksperrenposition (P) Energie speichert, falls der Klinkenzahn (26) in einer Auflageposition (A) auf einem Zahn (16) des Parksperrenrades (12) aufliegt,
**dadurch gekennzeichnet, dass**
eine Anschlageinrichtung (40) eine Verschwenkbewegung der Parksperrenklinke (24) aus der Auflageposition (A) in Richtung der Freigabeposition (F) bis zu einer Anschlagposition (B) begrenzt.

2. Parksperrenanordnung nach Anspruch 1, **dadurch gekennzeichnet, dass** der Verschwenkweg (46) von der Auflageposition (A) bis zu der Anschlagposition (B) kleiner ist als der Verschwenkweg (20) von der Auflageposition (A) in die Parksperrenposition (P).

3. Parksperrenanordnung nach Anspruch 1 oder 2, **dadurch gekennzeichnet, dass** der Verschwenkweg (46) von der Auflageposition (A) bis zu der Anschlagposition (B) kleiner ist als 10 mm, insbesondere kleiner als 5 mm.

4. Parksperrenanordnung nach einem der Ansprüche 1 - 3, **dadurch gekennzeichnet, dass** ein Anschlagelement (42) starr mit dem Betätigungsglied (32) verbunden ist.

5. Parksperrenanordnung nach einem der Ansprüche 1 - 4, **dadurch gekennzeichnet, dass** an der Parksperrenklinke (24) ein Anschlagabschnitt (44) ausgebildet ist, der in der Anschlagposition (B) an einem Anschlagelement (42) anliegt.

6. Parksperrenanordnung nach einem der Ansprüche 1 - 5, **dadurch gekennzeichnet, dass** das Betätigungsglied eine Betätigungswelle (32') ist, an der ein Betätigungsnocken (50) begrenzt verdrehbar gelagert ist, wobei die Einrückfeder (34') zwischen der Betätigungswelle (32') und dem Betätigungsnocken (50) wirkt.

7. Parksperrenanordnung nach Anspruch 6, **dadurch gekennzeichnet, dass** das Anschlagelement als Anschlagnocken (42') ausgebildet ist, der fest mit der Betätigungswelle (32') verbunden ist.

8. Parksperrenanordnung nach Anspruch 7, **dadurch gekennzeichnet, dass** der Anschlagnocken (42') axial benachbart zu dem Betätigungsnocken (50) angeordnet ist.

9. Parksperrenanordnung nach einem der Ansprüche 1 - 8, **dadurch gekennzeichnet, dass** die Parksperrenklinke einen Anschlagabschnitt in Form eines Axialvorsprunges (44') aufweist.

10. Parksperrenanordnung nach einem der Ansprüche 1 - 5, **dadurch gekennzeichnet, dass** das Betätigungsglied (32) linear verschieblich ist.
